# EUROPEAN PATENT APPLICATION

(11) **EP 1 612 659 A1**
(43) Date of publication of application: **04.01.2006**
(21) Application number: 04076868.1
(22) Date of filing: 29.06.2004
(51) Int. Cl.: G06F 3/16

(54) **Sound recording system and method**

(71) Applicant: GMB Tech (Holland) B.V., 3762 EC Soest (NL)
(72) Inventor: Borovitski, Michael, 1223 AD Hilversum (NL)
(74) Representative: Land, Addick Adrianus Gosling

(57) **Abstract**

The present invention provides a sound recording system for making a sound recording using a computer including a microprocessor and a memory, the system comprising:
- a microphone which is coupled to the microprocessor via an interface, for converting sound into electric signals;
- switching means arranged on the microphone and actively coupled therewith, for switching the microphone between a first neutral state and a second, active state;
- sound recording means for converting the electric signals into a sound recording, starting at a first moment in time and ending at a second moment in time, and for storing the sound recording in the memory; and
- control means, for defining the first and second moment in time induced by switching of the switching means to the second state and to the first state respectively; and
- electronic mail means for creating an electronic mail message,
wherein the control means actively attach the stored sound recording to the electronic mail message.

## Description

The present invention provides a sound recording system and to a method of creating an electronic mail message including sound.

Known electronic mail systems enable a user to create electronic mail messages by typing text from a keyboard and subsequently sending the message via a network such as the internet. On the other hand especially managers still frequently use a dictating machine for dictating voice messages and having these messages typed out by an assistant.

Although widely used, the drawbacks of these known systems are numerous. The typing of e-mail messages is highly dependent on the experience of the user and generally is slower and more complicated than recording voice messages. Recording sound using a dictating machine eventually is even slower as the typed out text has to be checked and possibly double-checked on misspelling.

Thus there exists a continuing need for a system and a method to obviate the above mentioned drawbacks.

The present invention therefore provides a sound recording system for making a sound recording using a computer including a microprocessor and a memory, the system comprising:
- a microphone which is coupled to the microprocessor via an interface, for converting sound into electric signals;
- switching means, actively coupled with the microphone, for switching the microphone between a first neutral state and a second, active state;
- sound recording means for converting the electric signals into a sound recording, starting at a first moment in time and ending at a second moment in time, and for storing the sound recording in the memory; and
- control means, for defining the first and second moment in time induced by switching of the switching means to the second state and to the first state respectively; and
- electronic mail means for creating an electronic mail message,
wherein the control means actively attach the stored sound recording to the electronic mail message.

The system according to the present invention provides the possibility of more easy and quickly creating e-mail messages with attached sound files. By switching the switching means a user can initiate the recording, so that sudden thoughts can be expressed in a more convenient manner, namely be speech instead of typing.

In a preferred embodiment the control means are coupled to the switching means for controlling the function of the active state thereof. Thus the function of the switching means can be user determined, improving ease of use of the system. Also the system can be adapted.

In a further preferred embodiment the switching means comprise a first button having a non-pushed state corresponding to the first state of the switching means and a pushed state corresponding to the second state of the switching means. The first button provides easier switching used for short messages. The sound is recorded as long as the first button is pushed.

In still a further embodiment the switching means comprise a second button having a non-pushed state and a pushed state, wherein the first state of the switching means is initialized by a first time that the second button is in its pushed state and wherein the second state of the switching means is initialized by a second time that the second button is in its pushed state. The second button provides easier switching used for longer messages. After pushing the button a first time the sound recording starts and after pushing it a second time the sound recording stops.

Preferably the system comprises compression means, which are arranged between the sound recording means and the control means, for compressing the sound recording using a technique such as MPEG layer-3. By compressing the sound recording sending it by e-mail is easier and faster.

The sound recording is preferably stored in the memory using a WAVE-format. This appears to be a convenient format for storing the recording.

In yet a further preferred embodiment the interface is a game port, wherein the microphone is connected to an offset voltage pin of the game port, wherein the switching means of the microphone are connected to a button 1 connector of the game port, such that when the switching means are in the first state a voltage level at the button 1 connector corresponds to a high level, logic level 1, whereas when the switching means are in the second state the voltage level corresponds to a logic level 0. By using the game port the system can include even older computers lacking a USB-port. The game port is also relatively robust. By the way of connection the microphone does not interfere with any other peripherals that are connected to the game port.

In another preferred embodiment the interface is a USB-port, wherein the microphone comprises an integrated circuit for converting the audio signal from the microphone to digital data packets and for transferring the packets to the USB-port. Thus the system appears to be more suitable for newer computers. Also the USB-port is relatively fast.

According to another aspect the present invention provides a method of creating an electronic mail message including sound, comprising the steps of:
- providing a sound recording system comprising a microphone and a computer including a microprocessor and a memory;
- switching switching means from a first neutral state to a second active state at a first moment in time;
- the system starting a sound recording;
- switching the switching means back to the first state;
- the system finishing the sound recording at a second moment in time;
- storing the sound recording in the memory;
- electronic mail means comprised in the system creating an electronic mail message; and
- control means of the system actively attaching the stored sound recording to the electronic mail message.

Further advantages and features of the system according to the present invention will be elucidated with reference to the annexed drawings, in which:
fig. 1 shows an overall perspective view of a system according to the present invention in a preferred embodiment;
fig. 2 shows a perspective view of the microphone of fig. 1;

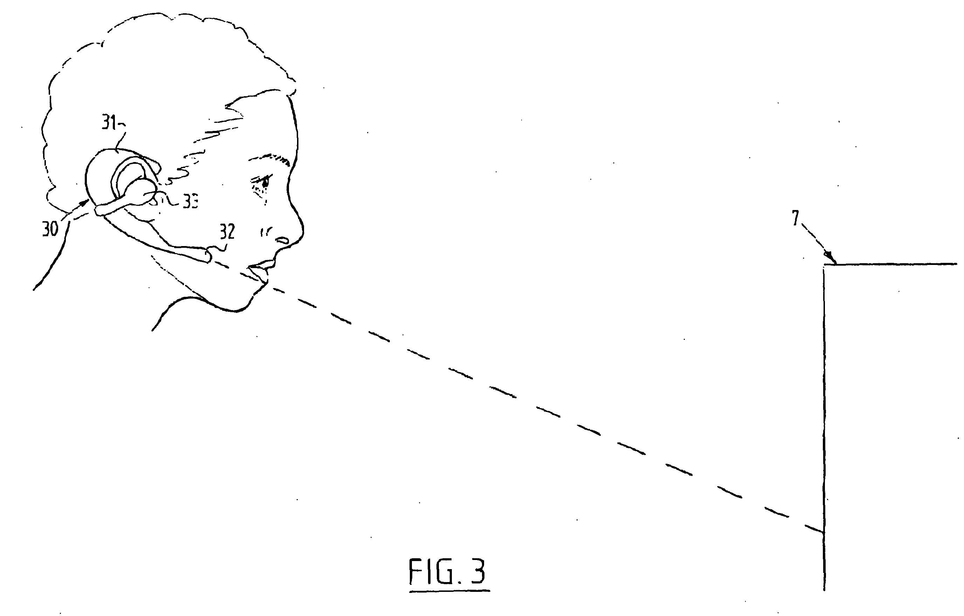

fig. 3 shows a side view of a microphone according to the present invention in a second preferred embodiment;
fig. 4 shows a block diagram of a sound recording system according to the present invention in a preferred embodiment;
fig. 5 shows a block diagram of a microphone and an interface of the system of fig. 4 in a first preferred embodiment; and
fig. 6 shows a block diagram of the microphone and the interface of fig. 4 in a second preferred embodiment.

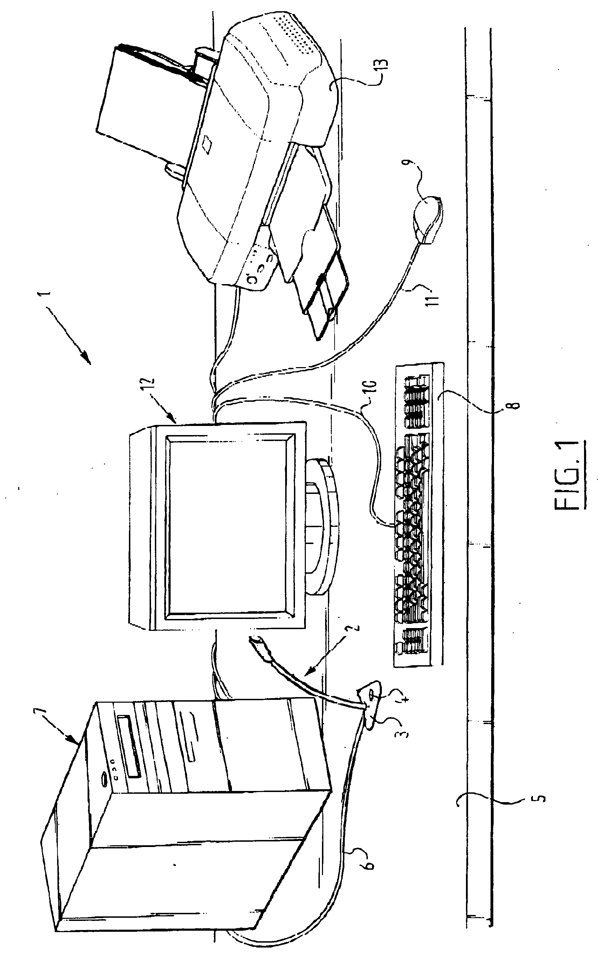

A sound recording system 1 according to the present invention (Fig. 1) comprises in a preferred embodiment a microphone 2 which includes a base 3, whereon at least one button 4 is arranged, for placing the microphone on a desk 5. Via wire 6 the microphone 2 is connected to a personal computer 7. The personal computer 7 is also connected to a keyboard 8 and a mouse 9 for inputting information via wires 10, 11 and to a monitor 12 for displaying output information thereon. In the shown embodiment also a printer 13 is connected to the computer 7.

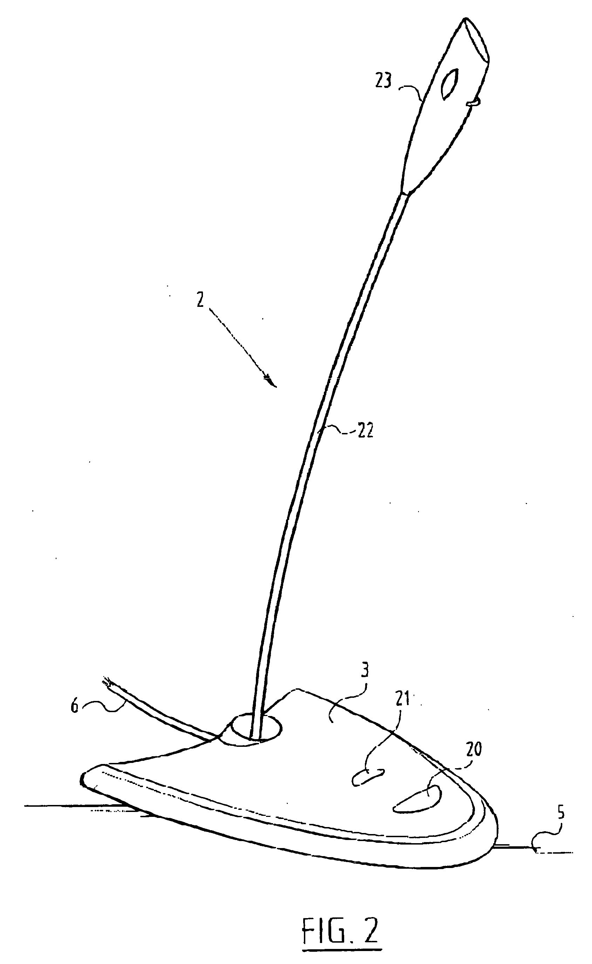

The microphone 2 comprises a base 3 which is substantially triangular or V-shaped for providing a firm and steady arrangement of the microphone on desktop 5 (fig. 2). On the base 3 two buttons 20, 21 are arranged. The buttons are user-programmable to perform frequently-used commands, such as the starting or ending of a recording. The functionality of the buttons will be described in more detail below. Extending upwardly from the base an elongated flexible rubber cylinder 22 is arranged, at the end of which a thickened head 23 is arranged incorporating a pick-up element (not shown) for converting sound to electric signals.

In a second embodiment the microphone is included in earpiece 30. The earpiece includes a curved part 31 for attaching thereof at the ear of a user. The curved part extends into an elongated part, extending partly to the mouth of the user when the earpiece is attached to the ear, at the end 32 of which the pick-up element is arranged. Furthermore, the earpiece 30 comprises a speaker 33 for producing sound into the ear of a user. The earpiece can transmit and receive electromagnetic signals either wireless or via a wire to and from computer 7.

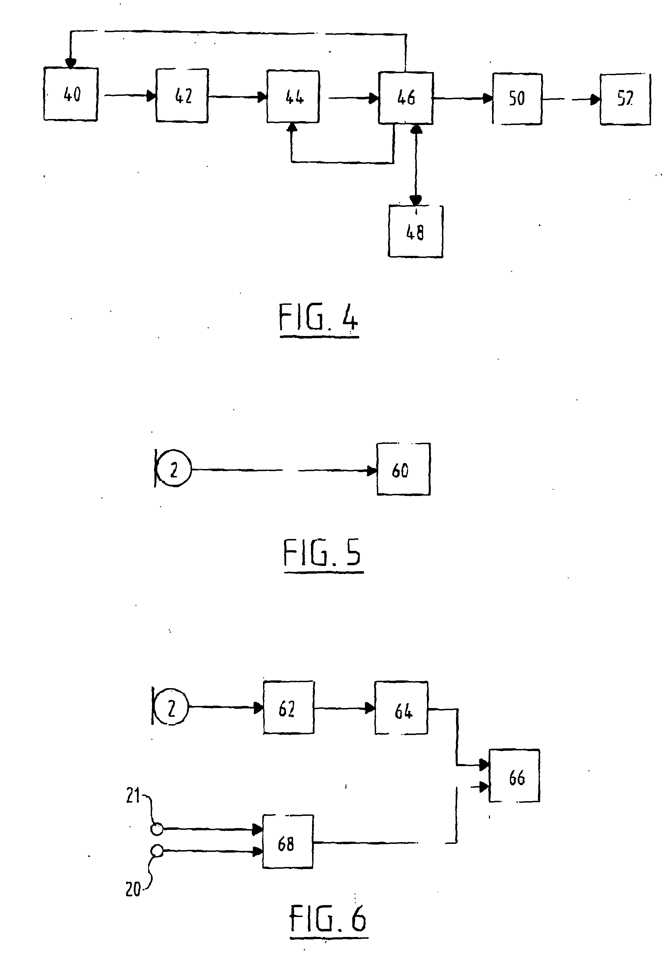

The sound recording system according to the invention comprises switching means 40 (fig. 4) such as the buttons 20, 21 shown in fig. 2. The switching means are coupled to the microphone and are able to switch between a first state and a second state. The first state is defined as OFF, or neutral, and the second state is defined as ON, or active. If a user pushes for instance a button, the means 40 switch to ON, resulting in sound recording means 42 to record the electric signals coming from the microphone in a suitable format, such as the WAVE format. For ease of handling the sound recording can be compressed by compressing means 44 into preferably a MPEG layer-3 format, which can be up to ten times compressed compared to the WAVE format. Subsequently control means 46 store the compressed recording in memory 48.

The control means 46 provide the parameters for compression to the compression means 44. Also they can be used to configure the switching means. Thus a user can configure the buttons 20, 21. As an example, button 20 can be configured for relatively short messages, wherein pushing button 20 corresponds to ON and releasing the button 20 corresponds to OFF. On the other hand, button 21 can be configured for longer messages, wherein pushing button 21 once corresponds to ON, and pushing it a second time corresponds to OFF.

The control means 46 are connected via e-mail client program interface 50 to an electronic mail program 52. The control means instruct to initiate a new e-mail message and to attache the sound recording stored in memory 48. The only thing a user now has to do is provide the e-mail program 52 with an address or the name of an addressee, and subsequently instruct the e-mail program to send the message (fig. 4).

So, the present sound recording device provides an easier and more convenient way to send messages. Upon having a thought, the user can just push a button, talk into the microphone and the device will convert the sound into a recording and attach it to an e-mail ready to be sent.

The microphone 2 is connected to the computer via an interface. In a first embodiment the interface is a game port 60. The microphone is connected to an offset voltage pin of the game port, wherein the switching means of the microphone are connected to a button 1 connector of the game port, such that when the switching means are in the first state (OFF) a voltage level at the button 1 connector corresponds to a high level, or logic level 1, whereas when the switching means are in the second state (ON) the voltage level corresponds to a logic level 0.

In a second preferred embodiment the interface is a USB-port. In this case the microphone comprises an integrated circuit, including an A/D converter 62 for converting the audio signal from the microphone to digital data packets and an audio stream processing unit for transferring the packets to the USB-port 66. The buttons 20, 21 are connected to input stream processing unit 68, which controls the ON and OFF state of the USB-port 66.

In a practical embodiment the system includes an omnidirectional condenser type microphone, having a sensitivity of -40 dB and a frequency range from 50 to 16000 Hz. The directivity of the microphone is adjustable to cancel background noise. The computer includes a microprocessor, a memory such as RAM, a sound card, a game port and/or a USB port. The components of the system can be implemented either in hardware, software or a combination thereof.

The present invention is not limited to the above described preferred embodiments, in which many modifications can be envisaged, within the scope of the appended claims.

## Claims

1. A sound recording system for making a sound recording using a computer including a microprocessor and a memory, the system comprising:
- a microphone which is coupled to the microprocessor via an interface, for converting sound into electric signals;
- switching means, actively coupled with the microphone, for switching the microphone between a first neutral state and a second, active state;
- sound recording means for converting the electric signals into a sound recording, starting at a first moment in time and ending at a second moment in time, and for storing the sound recording in the memory; and
- control means, for defining the first and second moment in time induced by switching of the switching means to the second state and to the first state respectively; and
- electronic mail means for creating an electronic mail message,
wherein the control means actively attach the stored sound recording to the electronic mail message.

2. The system of claim 1, wherein the control means are coupled to the switching means for controlling the function of the active state thereof.

3. The system of claim 1 or 2, wherein the switching means comprise a first button having a non-pushed state corresponding to the first state and a pushed state corresponding to the second state of the switching means.

4. The system of claim 1, 2 or 3, wherein the switching means comprise a second button having a non-pushed state and a pushed state, wherein the first state of the switching means is initialized by a first time that the second button is in its pushed state and wherein the second state of the switching means is initialized by a second time that the second button is in its pushed state.

5. The system of any of claims 1-4, comprising compression means, which are arranged between the sound recording means and the control means, for compressing the sound recording using a technique such as MPEG layer-3.

6. The system of any of claims 1-5, wherein the sound recording is stored in the memory using a WAVE-format.

7. The system of any of claims 1-6, wherein the interface is a game port, wherein the microphone is connected to an offset voltage pin of the game port, wherein the switching means of the microphone are connected to a button 1 connector of the game port, such that when the switching means are in the first state a voltage level at the button 1 connector corresponds to a high level, logic level 1, whereas when the switching means are in the second state the voltage level corresponds to a logic level 0.

8. The system of any of claims 1-6, wherein the interface is a USB-port, and wherein the microphone comprises an integrated circuit for converting the audio signal from the microphone to digital data packets and for transferring the packets to the USB-port.

9. Method of creating an electronic mail message including sound, comprising the steps of:
- providing a sound recording system comprising a microphone and a computer including a microprocessor and a memory;
- switching switching means from a first neutral state to a second active state at a first moment in time;
- the system starting a sound recording;
- switching the switching means back to the first state;
- the system finishing the sound recording at a second moment in time;
- storing the sound recording in the memory;
- electronic mail means comprised in the system creating an electronic mail message; and
- control means of the system actively attaching the stored sound recording to the electronic mail message.

10. Method according to claim 9, comprising the further step of compressing means compressing the sound recording before attachment thereof to the electronic mail message, using a compression technique such as MPEG layer-3.
